# EUROPEAN PATENT APPLICATION

(11) **EP 4 748 949 A1**
(43) Date of publication of application: **27.05.2026**
(21) Application number: 25216163.3
(22) Date of filing: 17.11.2025
(51) Int. Cl.: C21D 8/06, C21D 9/52, C22C 38/02, C22C 38/04, C22C 38/12, C22C 38/24, D01G 15/88

(54) **RIGID CARDING WIRE**

(30) Priority: 26.11.2024 EP 24215354
(71) Applicant: NV Bekaert SA, 8550 Zwevegem (BE)
(72) Inventor: VAN HAVER, Wim, 8550 Zwevegem (BE); SHEN, Li, Jiangyin, Jiangsu, 214429 (CN); XU, Rong, Jiangyin, Jiangsu, 214429 (CN)

(57) **Abstract**

A sawtooth wire made of alloyed steel for use as rigid carding wire is provided. The sawtooth wire consists of a flat or profiled base, and teeth, wherein the teeth are hardened and the alloyed steel comprises:
between 0.87 and 1.07wt.% carbon;
between 0.30 and 0.50wt.% manganese;
between 0.15 and 0.40wt.% silicon;
between 0.30 and 0.60wt.% vanadium;
less than 0.025wt% of phosphorous;
less than 0.025wt% of sulphur;
less than0.02wt% aluminium;
less than 0.02wt% molybdenum;
less than 0.01wt% niobium;
less than 0.05wt% of chromium;
less than 0.05wt% of nickel;
less than 0.05wt% of copper;
less than 0.05wt% of selenium;
less than 0.05wt% of arsenic.
the balance being iron.

The sawtooth wire has improved wear resistance and higher lifetime. A method to produce the same is provided.

## Description

### Technical Field

The invention relates to a steel wire for carding, in particular to a rigid card wire with improved wear resistance and higher lifetime.

### Background Art

Carding is a crucial mechanical process in textile manufacturing that disentangles, cleans, and intermixes fibers to produce a continuous web or sliver suitable for further processing. This process involves passing fibers between differentially moving surfaces covered with card clothing, which helps in opening, parallelizing, and removing impurities from the fibers.

There are three main types of carding wires used in this process: rigid, semi-rigid, and flexible. Rigid carding wires are characterized by their sturdy construction and are typically used on the main cylinder and doffer of the carding machine. They are designed to handle high production speeds and provide consistent performance over time. Semi-rigid carding wires offer a balance between flexibility and rigidity, making them suitable for various parts of the carding machine where moderate flexibility is required. Flexible carding wires, on the other hand, are used in areas where gentle handling of fibers is essential to minimize damage and ensure high-quality output.

Rigid carding wires must possess specific characteristics to perform effectively. They need to be highly durable to withstand the mechanical stresses of the carding process and maintain their shape and sharpness over extended periods. The wires should have a precise and uniform tooth geometry to ensure consistent fiber processing and minimize fiber damage. Additionally, they must be resistant to wear and corrosion to maintain their performance and longevity in the harsh operating conditions of a carding machine.

Rigid carding wires are produced by punching teeth in a profiled steel wire. A round steel wire is first drawn and then rolled to reduce the cross sectional area of the wire and to create the required cross sectional shape of the profiled steel wire. To enable the drawing and rolling cold deformation processes, the steel wire needs to have an appropriate microstructure. It is known to perform a batch annealing heat treatment on the steel wire in between steps of the cold deformation process. The annealing heat treatment involves spheroidization of the cementite in the pearlite microstructure to facilitate the cold deformation. After punching the teeth in the profiled steel wire, the tips of the teeth are first transformed to austenite and then quenched to provide them with an un-tempered martensitic microstructure. The other parts of the metallic card wire keeps its original microstructure consisting of ferrite and carbides. Optionally, stress relieving can be carried out after the cold deformation and before the quenching, to ensure the base of the carding wire can be bent around the cylinder without cracking.

A broad range of alloyed steel compositions is known from US3853494A, which provides a sawtooth wire with Vickers hardness HV>1200. A particularly advantageous alloy contains, for instance, 0.5 to 0.6% by weight carbon, 0.5 to 0.8% by weight manganese, 1.2 to 1.6% by weight silicon, and 0.5 to 0.8% by weight chromium.

In CH660884A5 a combination of chromium and vanadium has a favourable effect on abrasion. In a preferred embodiment, the proportions for carbon are 0.6-0.8% by weight, for silicon 0.15-0.35% by weight, for manganese 0.6-0.8% by weight, for vanadium 0.12-0.3% by weight and for chromium 0.4-0.6% by weight. The contamination by phosphorus, sulphur, nickel and copper must be kept to a minimum, i.e. the upper limit should be 0.1% by weight.

CN103952630A discloses a sawtooth profile with high strength, having a clear and smooth surface after cold rolling, wherein no vanadium or tungsten is present. Higher carbon, between 0.93 and 1.05% by weight, and high chromium, between 1.35 and 1.60% by weight provide cold deformability.

EP2319950A1 discloses a steel composition with high molybdenum, 1% in weight, tungsten between 0.25 and 0.35% in weight, vanadium 0.5% in weight and chromium between 1.45 and 1.55% in weight. The combination of chromium and vanadium improves the re-sharpening.

CN105838981A discloses another steel grade that can be used for the production of metallic card wire, e.g. a sawtooth wire, which comprises between 0.2 and 0.5% in weight chromium, between 0.04 and 0.20% in weight vanadium, and between 0.015 and 0.06% in weight niobium. The niobium addition provides small grains in the quenched and tempered product.

### Disclosure of Invention

Although several steel compositions are already disclosed in the prior art it remains challenging to select a specific steel composition that allows to obtain a product having both a soft core, which needs to be shaped and bent around a roller, and hard teeth that need to be wear resistant.

Moreover, due to the extreme differences in mechanical properties between the teeth and the core of the sawtooth wire, the transition between the teeth and the core is a weak point, where high internal stresses can be built, causing e.g. cracks to be initiated, leading to damages such as bending or breaking of the teeth.

It is a first object of the invention to provide a rigid carding wire with teeth, hereunder designated as sawtooth wire, with a specific steel composition for installation on a roller of a carding machine. Said specific steel composition improves the lifetime of said sawtooth wire by reducing the weak points between the teeth and the core, thereby increasing the resistance of the teeth to bending or cracking.

In contrast with several alloyed steel compositions from the prior art, the carbon content is between 0.87 and 1.07% in weight, preferably between 0.90 and 1.05wt%, more preferably between 0.93 and 1.03wt%, e.g. between 0.95 and 1.0wt%. The high carbon content significantly enhances the hardness and tensile strength of the steel, making it more resistant to wear and deformation. The high carbon content also improves the edge retention of the teeth. Teeth need to maintain sharp edges to effectively process fibers.

The sawtooth wire of the invention is made of a steel composition that comprises between 0.30 and 0.50wt% manganese. Manganese improves the toughness and strength of the steel, helping to prevent brittleness. Manganese increases hardenability, making it easier to obtain martensite after quenching. Manganese also acts as a deoxidizer, removing oxygen from the steel and improving its overall quality.

The silicon content is between 0.15 and 0.40wt%, preferably between 0.20 and 0.35 wt%. Silicon contributes to the strength and hardness of the steel. It also enhances the elasticity, which is beneficial for the flexibility and durability of the carding wire. Silicon also acts as a deoxidizer, removing oxygen from the steel and improving its overall quality.

The vanadium content is between 0.30 and 0.60 wt%, preferably between 0.35 and 0.55 wt%, e.g. between 0.35 and 0.45wt% or between 0.40 and 0.50 wt% or between 0.45 and 0.55wt%. Vanadium helps in refining the grain structure of the steel, leading to improved mechanical properties. It also enhances wear resistance, through the formation of very hard vanadium carbides, which is essential for the longevity of the carding wire.

The phosphorous and sulphur should be kept to a minimum level, and should be between 0.0001 and 0.025wt%. Keeping these elements at low levels reduces the risk of brittleness and improves the overall ductility of the steel.

Aluminium and molybdenum should also be kept to a minimum level, and should be between 0.0001 and 0.02wt%.

The balance is iron.

No additional alloying element shall be intentionally added to the steel composition. In contrast with the steel compositions from the prior art, no additional alloying elements are needed or wanted. If present as trace elements, other elements should be kept at a low level. For instance, chromium is not required and if present it should be in a quantity below 0.05wt%, preferably less than 0.02wt%, more preferably less than 0.01wt%. Similarly, nickel is not required and if present it should be below 0.05wt%, preferably below 0.02wt%, more preferably below 0.01wt%. In the case chromium and nickel would be present in the steel composition, the sum of chromium, nickel and molybdenum should be between 0.0001 and 0.15wt%, preferably between 0.0001 and 0.10wt%, more preferably between 0.0001 and 0.05wt%.

The steel composition, should not comprise copper, selenium or arsenic. If those elements are present as trace elements, or residual elements, copper, selenium and arsenic should be present in quantities less than 0.05wt%, preferably less than 0.02wt%, more preferably less than 0.01wt% when taken separately, or such that the sum of copper, selenium and arsenic is between 0.0001 and 0.15wt%, preferably between 0.0001 and 0.10wt%, more preferably between 0.0001 and 0.05wt%.

Other elements such as tungsten or niobium are also not required. If those elements are present as trace elements, or residual elements, niobium or tungsten should be present in quantities less than 0.01wt%, preferably less than 0.005wt%, more preferably less than 0.002wt%.

It was found that this specific composition balances hardness, strength, toughness, and wear resistance, making it ideal for rigid carding wires, or sawtooth wires that need to maintain sharpness and durability during fiber processing.

The combination of high carbon content and vanadium contributes to superior wear resistance. This is crucial for maintaining performance over extended use, reducing the frequency of replacements.

The presence of manganese and silicon improves the overall toughness and strength of the wire, making it less prone to breakage and deformation under stress.

The refined grain structure due to vanadium and the high martensitic matrix hardness from carbon content, and the presence of very hard vanadium carbides ensure that the carding wire can handle a variety of fibers more effectively, leading to better quality yarn and higher throughput.

Compared to existing carding wires, which may use different steel compositions, the specified composition offers a balanced combination of hardness, toughness, and wear resistance, leading to improved performance and longevity.

The inventors have found that surprisingly, with the above-disclosed steel composition, when a hardening heat treatment was done, the depth of hardened teeth was significantly improved in the sawtooth wire of the invention compared to sawtooth wires obtained with other steel compositions, subjected to the same hardening heat treatment.

Firstly, the depth of the hardened teeth in the sawtooth wire of the invention is higher, resulting in a ratio of hardened length to the length between the tip and the base of the teeth greater than 0.75.

The hardening ratio is obtained by means of optical microscopy. Etching heat treated sawtooth wires with e.g. nital reveals the hardened part of the teeth, which appears bright in the microscope while the unhardened part of the core material remains dark. A first length d1 is measured following the front of the teeth to the end of the bright zone. A second length d2 is measured following a parallel to the front of the teeth from the tip to the bottom of the gutter between two adjacent teeth. The ratio d1/d2 provides the hardening ratio.

A high hardening ratio, above 0.75 means the teeth remain sharper for longer periods, enhancing the efficiency and lifespan of the carding wire.

A high hardening ratio above 0.75 provides additional resistance against bending or premature cracking of the teeth in service.

As a particular embodiment, a sawtooth wire is provided with the steel composition previously disclosed, and wherein the ratio d1/d2 is higher than 0.75, preferably higher than 0.77, more preferably higher than 0.80.

Secondly, the transition distance between the hardness of the teeth and the hardness of the base is smaller with the above-disclosed steel composition compared to other steel compositions from prior art.

In sawtooth wires produced with steel compositions from the prior art, the transition distance, d3, from the (maximum hardness - 20HV), i.e. usually above 750HV in the teeth, and the low hardness, i.e. usually below 300HV in the core, is rather smooth and can extend in a large distance, e.g. more than 30% and up to 50% of the length of the teeth d2.

The transition distance can be measured either optically with light optical microscope or in a more accurate way by producing a hardness profile.

The transition distance d3 can be measured by establishing a hardness profile following a line starting from the tip of the teeth down to the base of the sawtooth wire. To avoid influences from the sides, the hardness profile shall follow a line median to the teeth, i.e. between the front and the back of the teeth. Hardness shall be measured at regular intervals, e.g. each 0.05 or 0.1mm with a constant load, e.g. 0.1kg or 0.5kg. Vickers or Rockwell hardness imprints can be used. The derivative of the hardness in function of the length can be used to better define the transition distance d3.

Surprisingly, with the sawtooth wire of the present invention, the transition distance d3 was measured to be lower than 30% of the length of the teeth d2 as measured from the tip of the teeth and the base line formed by the bottom of the gutters. This unexpected behaviour, alone or in combination with the high rate of hardening, provides longer life to the sawtooth wire as the teeth may be grinded more times without losing their hardness and therefore their abrasion resistance.

As another particular embodiment, a sawtooth wire is therefore provided with the steel composition previously disclosed, and wherein the transition distance d3 between the (max.hardness of the teeth - 20HV) and the hardness of the base is less than 30%, preferably less than 25%, more preferably less than 20% of the length of the teeth d2 as measured from the tip of the teeth and the base line formed by the bottom of the gutters.

A sawtooth wire of the invention with the steel composition previously disclosed and one or both particular embodiments above can advantageously have its teeth re-grinded several times without losing their hardness and abrasion resistance, thereby significantly increasing the time before the need to be replaced.

It is a second object of the invention to provide a method of manufacturing a sawtooth wire for use as a rigid carding wire. The method comprises the steps:
- Providing a steel wire rod comprising:
   between 0.87 and 1.07wt.% carbon;
   between 0.30 and 0.50wt.% manganese;
   between 0.15 and 0.40wt.% silicon;
   between 0.30 and 0.60wt.% vanadium;
   less than 0.025wt% of phosphorous;
   less than 0.025wt% of sulphur;
   less than0.02wt% aluminium;
   less than 0.02wt% molybdenum;
   less than 0.01wt% niobium;
   less than 0.05wt% of chromium;
   less than 0.05wt% of nickel;
   less than 0.05wt% of copper;
   less than 0.05wt% of selenium;
   less than 0.05wt% of arsenic.
   the balance being iron.

The same limitations and preferred ranges as disclosed previously apply to the steel wire rod composition. The wire rod is preferably obtained by hot rolling and can be provided in an annealed state.
- Drawing said steel wire rod in one or more drawing steps, such that the diameter of the wire after drawing is between 15% and 90% of the initial wire rod diameter, preferably ; Preferably, the diameter of the wire after drawing is between 20% and 80% of the initial wire rod diameter;
- Optionally, one or more intermediate annealing or patenting operations can be performed to recover ductility between one or more drawing steps;
- Annealing the final drawn wire between 600°C and 750°C; The annealing step is preferably a standard batch annealing process;
- Flattening or shaping the annealed wire; Preferably, the flattening is a cold rolling. Flattening or shaping can also be obtained by a cold drawing process;
- Punching or machining the teeth;
- Optionally stress relieving the deformed wire. This step can be performed before or after machining the teeth.

For some applications the obtained rigid card wire can be used as such, or teeth can be hardened by e.g. providing a coating or by grinding.

The method further comprises a hardening step by heat treating the teeth by e.g. a flame or laser or induction, to achieve a hardened depth such that the ratio of the hardened length divided by the length between the tip and the base of the teeth is higher than 0.75.

The sawtooth wire of the invention can be advantageously used as a component in several parts of a carding machine, separately or in combination:
- as a cylinder wire of a carding machine;
- as a doffer wire on the doffer cylinder of a carding machine;
- as a licker-in wire of a carding machine;
- as a flat of a carding machine.

### Brief Description of the Figures in the Drawings

Figure 1 is a schematic drawing of a carding machine.
Figure 2 is a schematic drawing of a sawtooth wire with a first profile.
Figure 3 is a schematic drawing of a sawtooth wire with a second profile.
Figure 4 is a graph comparing hardness profiles measured from the tip to the base of sawtooth wires made from different steel compositions.

### Mode(s) for Carrying Out the Invention

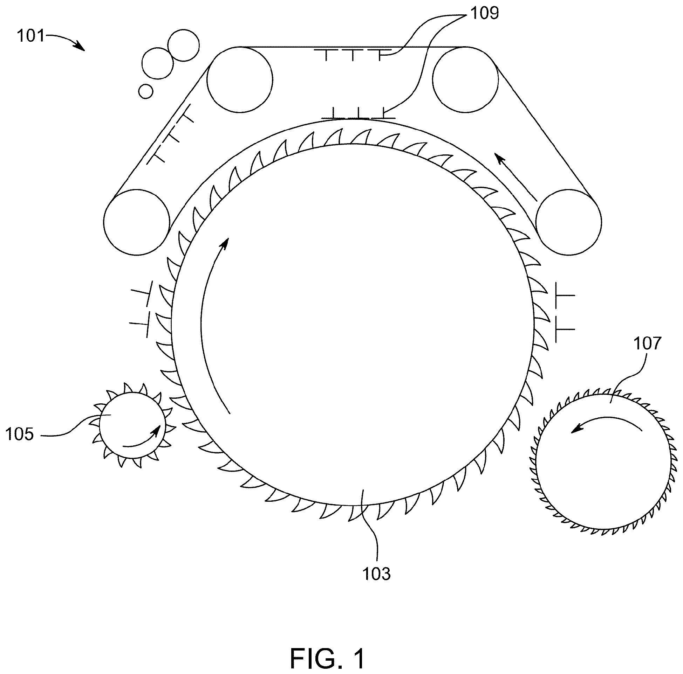

Figure 1 is a schematic drawing of a carding machine 101. A carding machine works by disentangling, cleaning, and aligning fibers to produce a continuous web or sliver. The main cylinder 103 is covered with fine wires, responsible for the main carding action. It disentangles and aligns the fibers.

The licker-in, also called taker-in, 105 is a rotating cylinder with inclined teeth that grabs the fibers from the feed roller and transfers them to the main cylinder.

The doffer 107 is a rotating cylinder that removes the carded fibers from the main cylinder and forms them into a continuous web or sliver.

Flats 109 are stationary bars with fine wires positioned close to the main cylinder. They further refine the carding process by removing short fibers and impurities.

Depending on the machine, some cylinders may rotate in different directions compared to the directions indicated by the arrows on the illustrative drawing of figure 1.

The sawtooth wire of the invention is intended for use either on the flats, and/or on the main cylinder, and/or and/on the taker-in, and/or on the doffer. Different designs maybe required for the different specific uses.

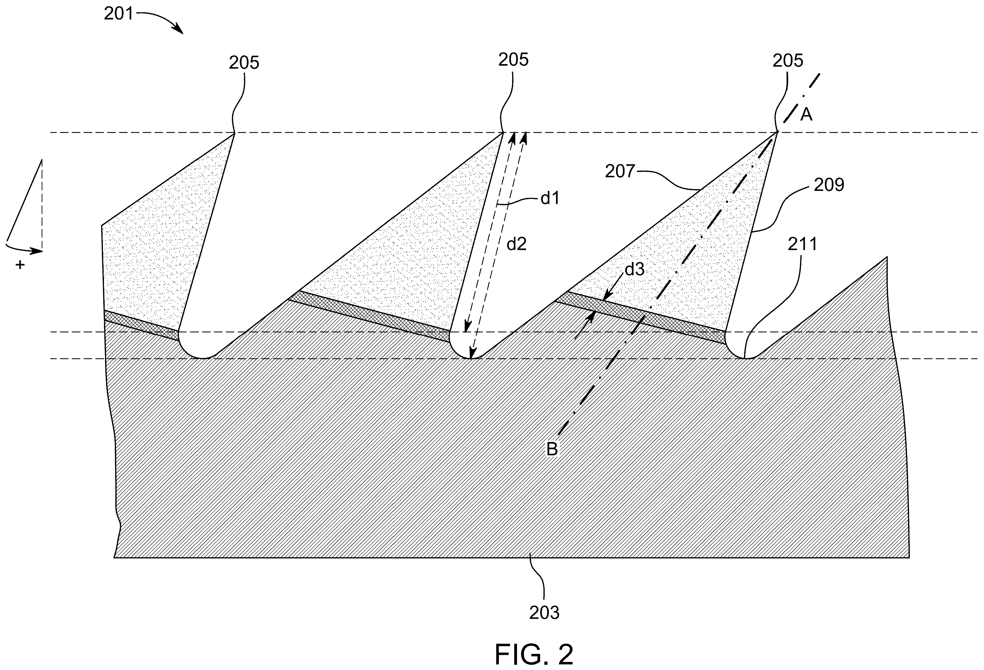

Figure 2 is a schematic drawing of a sawtooth wire 201 with a typical design for e.g. use on the main cylinder.

The rigid carding wire, or sawtooth wire 201 has a base 203, and teeth 205. Each tooth can be characterized by its back 207, its front 209 and the gullet 211. In figure 2 the angle formed by the front of the teeth and a vertical line is positive. A positive angle provides enhanced fiber control, improved carding efficiency, reduced fiber damage and higher production rate. A design as in figure 2 is usually privileged for high volume production.

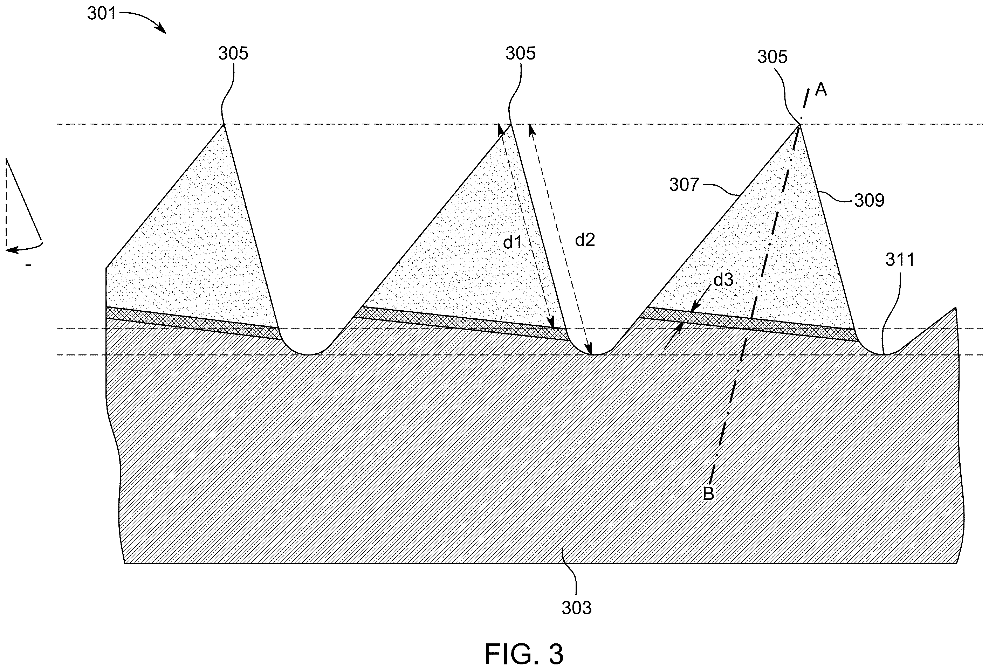

Figure 3 is a schematic drawing of a sawtooth wire 301 with another typical design. Each tooth can be characterized by its back 307, its front 309 and the gullet 311. In figure 3 the angle formed by the front of the teeth and a vertical line is negative. A negative angle provides gentler fiber handling, improved fiber retention, reduced wear and tear, and smoother operation. A sawtooth wire design as in figure 3 is usually privileged for consistent quality.

To compare the sawtooth wire of the invention with sawtooth wires having steel compositions from prior art, different wire rods were provided, with the compositions given in table 1. Compositions were measured by inductively coupled plasma spectroscopy. All contents are in weight%. When no value is indicated, the element was not measurable, i.e. below the detection threshold.

**Table 1. Steel compositions.**

| | C | Mn | Si | V | Cr | P | S | Al | W | Nb | B |
|---|---|---|---|---|---|---|---|---|---|---|---|
| INV1 | 0.93 | 0.45 | 0.25 | 0.36 | 0.03 | 0.01 | 0.007 | 0.004 | - | - | - |
| INV2 | 1.02 | 0.38 | 0.30 | 0.41 | 0.02 | 0.01 | 0.010 | 0.001 | - | - | - |
| CE1 | 0.74 | 0.69 | 0.21 | 0.13 | 0.3 | 0.011 | 0.005 | - | - | 0.07 | - |
| CE2 | 0.82 | 0.71 | 0.25 | 0.071 | 0.04 | 0.01 | 0.006 | 0.001 | - | - | 0.003 |
| CE3 | 0.90 | 0.51 | 0.21 | 0.14 | 0.22 | 0.017 | 0.008 | - | - | 0.024 | - |
| CE4 | 0.98 | 0.22 | 0.15 | 0.05 | 0.26 | 0.011 | 0.004 | - | - | - | - |
| CE5 | 1.00 | 0.31 | 0.3 | - | 1.46 | 0.018 | 0.001 | 0.012 | - | - | - |
| CE6 | 0.82 | 0.34 | 0.28 | 0.151 | 0.26 | 0.007 | 0.007 | - | 0.631 | - | - |

INV1 and INV2 are steel compositions used for the sawtooth wire of the invention, comprising only carbon, manganese, silicon and vanadium as main alloying elements.

CE1 to CE6 are steel compositions used for comparative sawtooth wires and differ from INV1 and INV2 by lower carbon (CE1, CE2, CE6) and/or lower vanadium contents (CE1 to CE6) and/or high chromium (CE1, CE3, CE4, CE5, CE6) and/or additional alloying elements such as niobium, boron or tungsten (CE1, CE2, CE3, CE6).

Steel wire rods with 5.5mm diameter of each steel composition were drawn in several passes or directly to a final diameter of 1.15mm or 1.3mm, i.e. the drawn wire diameter was respectively 21 % and 24% of the wire rod diameter. In some experiments wire rods with 5.5mm were drawn in several passes to intermediate diameters ranging from 1.3 to 3.1mm. Intermediate drawn wires were patented or annealed in a continuous process, or batch annealed, to recover ductility before further drawing to a final diameter of 1.15mm or 1.3mm.

The drawn wires with a final diameter of 1.15mm or 1.3mm were annealed at a temperature between 600°C and 750°C, providing soft wires with ferrite and carbides.

Wires were flattened or shaped by cold rolling to a width of 3.6mm and a thickness of 0.4mm, and teeth were punched to produce different profiles.

To compare the advantageous effect of the steel composition of the inventive wire, the same design was chosen for all wires produced with the compositions of table 1.

A sawtooth wire profile according to figure 2 was chosen and was identical for all samples.

The distance between the tip of the teeth 205 and the gutter 211 was measured to be 1.83mm following a perpendicular to the wire length. Following the front line 209, the distance between the tip of the teeth 205 and the gutter 211 was 2.1mm.

The deformed wires were stress relieved to soften the base and allow easier installation around the respective cylinders of a carding machine.

Finally, teeth were hardened by flame hardening, providing martensitic teeth while keeping the soft spheroidized pearlitic microstructure in the core of the wires.

Teeth with a positive angle between a vertical line and the front line were punched and hardened. The distance d2 between the tip of the teeth and a horizontal line connecting the bottom of the gutters was measured to be 2.1mm. Each wire was polished and etched with nital before observation in an optical microscope at a magnification that allows measuring the hardening length d1, e.g. x10 or x20.

The hardened part of the teeth is bright under light optical microscopy, while the unhardened remainder appears dark. The distance d1 is measured from the tip of the teeth till the end of the bright zone, following the front line. Figures 2 and 3 illustrate how d1 and d2 are measured in sawtooth wires of different profiles.

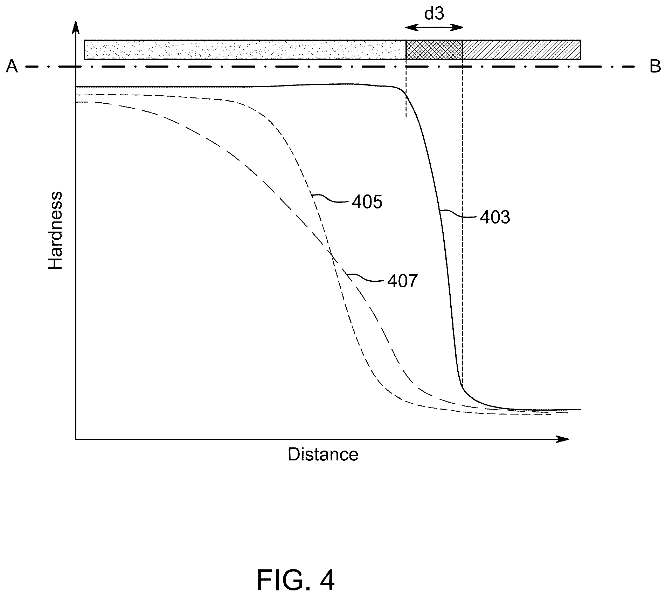

Figure 4 is a hardness vs distance plot measured for different sawtooth wires. Vickers hardness with 0.1kg is measured following a median line, as indicated by the A-B line in figure 2. Hardness imprints are spaced by 0.1mm. The hardness of the teeth, HV max. is above 790HV in all samples. The base hardness is taken as 300HV for all samples. In the illustrative examples of figure 4, curve 403 shows the hardness profile measured in the inventive wire INV2. The transition distance d3 between (HV max - 20HV), i.e. 830HV and the base hardness, i.e. 300HV is 400µm. In comparative sample CE2, the hardness profile as illustrated by curve 405 shows a smoother transition, with the distance d3 between 805HV and 300HV being 700µm. In comparative sample CE5, the transition distance d3 between 770HV and 300HV is 1000µm. It can be seen on figure 4 that the hardening length d1 is higher for INV2 compared to CE2 and CE5, providing, hardening ratios of 0.81, 0.70 and 0.59, respectively.

**Table 2. Max. hardness, hardening length d1, teeth length d2, hardening ratio d1/d2, transition distance d3, and transition ratio d3/d2 for prior art and invention sawtooth wires.**

| | Hv max. | d1, µm | d2,µm | d1/d2 | d3,µm | d3/d2 |
|---|---|---|---|---|---|---|
| INV1 | 851 | 1580 | 2100 | 0.75 | 600 | 0.29 |
| INV2 | 852 | 1699 | 2100 | 0.81 | 400 | 0.19 |
| CE1 | 793 | 1244 | 2100 | 0.59 | 600 | 0.29 |
| CE2 | 825 | 1465 | 2100 | 0.70 | 700 | 0.33 |
| CE3 | 840 | 1371 | 2100 | 0.65 | 700 | 0.33 |
| CE4 | 843 | 1273 | 2100 | 0.61 | 700 | 0.33 |
| CE5 | 790 | 1238 | 2100 | 0.59 | 1000 | 0.48 |
| CE6 | 836 | 1534 | 2100 | 0.73 | 700 | 0.33 |

In comparison with CE1 to CE6, sawtooth wires of the invention INV1 and INV2 can have their teeth re-grinded several times without affecting their efficiency as their hardness remains unaffected.

## Claims

1. A sawtooth wire made of alloyed steel for use as a rigid carding wire, said sawtooth wire consists of a flat or profiled base, and teeth,
wherein said teeth are hardened,
**characterized in that** said alloyed steel comprises:
- between 0.87 and 1.07wt.% carbon;
- between 0.30 and 0.50wt.% manganese;
- between 0.15 and 0.40wt.% silicon;
- between 0.30 and 0.60wt.% vanadium;
- less than 0.025wt% of phosphorous;
- less than 0.025wt% of sulphur;
- less than0.02wt% aluminium;
- less than 0.02wt% molybdenum;
- less than 0.01wt% niobium;
- less than 0.05wt% of chromium;
- less than 0.05wt% of nickel;
- less than 0.05wt% of copper;
- less than 0.05wt% of selenium;
- less than 0.05wt% of arsenic.
- the balance being iron.

2. The sawtooth wire according to claims 1 wherein the hardening ratio d1/d2 is higher than 0.75, with d1 the hardened length as measured from the tip of the teeth following the front line and d2 the distance measured parallel to d1 from the tip of the teeth and the base line formed by the bottom of the gutters.

3. The sawtooth wire according to claims 1 or 2 wherein the transition distance d3 between the maximum hardness of the teeth minus 20HV and the hardness of the base is less than 30% of the length of the teeth d2 as measured from the tip of the teeth and the base line formed by the bottom of the gutters.

4. A method of manufacturing a sawtooth wire for use as a rigid carding wire, comprising the steps:
- Providing a steel wire rod comprising:
between 0.87 and 1.07wt.% carbon;
between 0.30 and 0.50wt.% manganese;
between 0.15 and 0.40wt.% silicon;
between 0.30 and 0.60wt.% vanadium;
less than 0.025wt% of phosphorous;
less than 0.025wt% of sulphur;
less than0.02wt% aluminium;
less than 0.02wt% molybdenum;
less than 0.01wt% niobium;
less than 0.05wt% of chromium;
less than 0.05wt% of nickel;
less than 0.05wt% of copper;
less than 0.05wt% of selenium;
less than 0.05wt% of arsenic.
the balance being iron.
- Drawing said steel wire rod such that the diameter of the wire after drawing is between 15% and 90% of the initial wire rod diameter;
- Annealing the drawn wire between 600°C and 750°C;
- Flattening or shaping the annealed wire;
- Punching or machining the teeth;
- Stress relieving the deformed wire.
- Heat treating the teeth to achieve a hardened depth such that the ratio of the hardened length divided by the length between the tip and the base of the teeth is higher than 0.75.

5. The method according to claim 4, wherein the drawing step comprises one or more intermediate steps of annealing or patenting.

6. The method according to claim 4 wherein the teeth are hardened by flame.

7. The method according to claim 4 wherein the teeth are hardened by induction.

8. The method according to claim 4 wherein the teeth are hardened by laser.

9. Use of a sawtooth wire according to any of claims 1-3 as a cylinder wire of a carding machine.

10. Use of a sawtooth wire according to any of claims 1-3 as a doffer wire on the doffer cylinder of a carding machine.

11. Use of a sawtooth wire according to any of claims 1-3 as a licker-in wire of a carding machine.

12. Use of a sawtooth wire according to any of claims 1-3 in a flat of a carding machine.
